# FASCICULE DE BREVET EUROPEEN

(11) **EP 1 652 600 B1**
(45) Date de publication et mention de la délivrance du brevet: **16.07.2008**
(21) Numéro de dépôt: 05292280.4
(22) Date de dépôt: 27.10.2005
(51) Int. Cl.: B21K 1/76, B21K 1/06, F16C 7/00

(54) **Procédé de laminage et d'estampage à chaud d'une pièce profilée ayant des variations de section**
Verfahren zum Warmwalzen und Umformen eines Werkstückes mit varierendem Querschnitt
Method of hot rolling and stamping a workpiece with changing cross-section

(30) Priorité: 29.10.2004 FR 0411591
(43) Date de publication de la demande: 03.05.2006
(73) Titulaire: PEUGEOT CITROËN AUTOMOBILES S.A., 78140 Vélizy Villacoublay (FR)
(72) Inventeur: Fogliatto, Erwin, 68130 Altkirch (FR); Morin, Jean-Yves, 68260 Kingersheim (FR)
(74) Mandataire: Thinat, Michel

(56) Documents cités:
- US-A1- 2004 123 462
- PATENT ABSTRACTS OF JAPAN vol. 012, no. 116 (M-684), 13 avril 1988 (1988-04-13) -& JP 62 244545 A (MITSUBISHI HEAVY IND LTD), 24 octobre 1987 (1987-10-24)
- PISCHEL H: "STAND UND ENTWICKLUNGSTENDENZEN BEIM HERSTELLEN VON PLEUELN" 1 décembre 1990 (1990-12-01), WERKSTATT UND BETRIEB, HANSER, MUNCHEN, DE, PAGE(S) 949-955 , XP000173635 ISSN: 0043-2792 * page 950, colonne 2 - page 951, colonne 2; figures 3,4 *
- PATENT ABSTRACTS OF JAPAN vol. 011, no. 247 (M-615), 12 août 1987 (1987-08-12) -& JP 62 057732 A (HONDA MOTOR CO LTD), 13 mars 1987 (1987-03-13)
- DOEGE E ET AL: "TECHNOLOGIEENTWICKLUNG ZUM PRAZISIONSSCHMIEDEN VON LANGTEILEN" UMFORMTECHNIK, MEISENBACH, BAMBERG, DE, vol. 30, no. 3, 1 septembre 1996 (1996-09-01), pages 152,154-156, XP000631062 ISSN: 0300-3167

## Description

L'invention concerne un procédé de laminage et d'estampage à chaud pour obtenir une pièce profilée ainsi qu'une pièce profiléeselon le préambule de la revendication 1.

Pour la réalisation de pièces mécaniques utilisées comme moyen de transmission ou comme partie d'une mécanique de transmission de mouvement, telles que des bielles, des arbres primaires, des arbres secondaires et des boîtiers de rotule ou toute autre pièce qui possède des variations de section, on utilise de préférence des procédés de forgeage ou d'estampage à chaud. Ces procédés confèrent à ces pièces les caractéristiques mécaniques nécessaires pour les rendre à la fois apte à résister aux contraintes de poussée ou de traction pendant leur fonctionnement et à garder une certaine flexibilité.

Pour effectuer le forgeage ou l'estampage dans les meilleures conditions économiques, notamment afin de générer le moins possible de bavures lors de l'estampage, les pièces brutes à partir desquelles les pièces mécaniques doivent être forgées ou estampées sont habituellement passées dans un laminoir afin de les préformer et notamment afin de répartir la matière des pièces brutes, habituellement en plusieurs passes de laminoir, avant de les soumettre à l'estampage ou au forgeage.

Le nombre de passes au laminoir dépend de la géométrie du produit final et des caractéristiques inhérentes à la matière dans laquelle les pièces sont à fabriquer. Par ailleurs, il est indispensable de respecter certaines valeurs de coefficient de déformation entre chacune des passes de laminoir.

A la suite de l'opération de laminage, il est nécessaire de passer en général par plusieurs frappes de forgeage pour obtenir le produit final.

Le plus souvent, l'estampage est réalisé en deux coups de presse, à savoir un coup d'ébauche et un coup de finition. L'objectif du coup d'ébauche est de répartir plus précisément la matière pour faciliter le remplissage de la gravure de finition et pour partager les usures d'outillage entre les matrices d'ébauche et les matrices de finition. La réalisation des pièces se termine avec une étape de découpe de la bavure, l'étape étant habituellement appelée "ébarbage". Cette étape est effectuée soit sur une presse annexe, soit sur la presse à forger même.

Le document JP-A-62244545 divulgue par exemple un procédé de laminage et d'estampage à chaud du type de l'invention.

La réalisation des pièces énumérées plus haut par laminage et estampage est donc faite sur deux machines différentes, à savoir un laminoir et une presse à forger. Le formage des pièces sur le laminoir, donc le laminage à partir d'un lopin, se fait par un ensemble de rouleaux de laminage spécialement conçus à cet usage, c'est-à-dire par des rouleaux comportant sur leur pourtour en alternance des segments de laminage et des espaces vides. Chaque segment de laminage comporte un certain nombre de moules axialement disposés les uns après les autres et allant d'un premier moule destiné à conférer à un lopin une première forme assez brute, à un dernier moule destiné à conférer à la pièce une forme suffisamment précise pour pouvoir être transférée à la presse à forger. Ce laminage est fait avec des passes successives de chacune des pièces dans chacun des moules selon le principe rappelé dans les dessins, afin que la pièce se transforme étape par étape du lopin jusqu'à un produit semi-fini: Un lopin est introduit, par un manipulateur, entre le premier moule et le contre-moule correspondant, y est formé et en est extrait par le manipulateur, par un mouvement de retour, lorsque les espaces vides des rouleaux de laminage sont en regard. Puis, la pièce ainsi préformée dans un premier cycle de formage est positionnée devant le moule suivant et le cycle de formage recommence, et cela jusqu'au dernier moule, duquel est extrait un produit semi-fini.

Ensuite, le produit semi-fini est acheminé à une presse à forger où elle est introduite dans un premier temps dans une matrice d'ébauche et puis dans une matrice de finition si l'on arrive à estomper la pièce en deux passes d'estampage. Le cas échant, des passes supplémentaires dans des matrices supplémentaires sont à prévoir.

Compte tenu du nombre de manipulations nécessaires pour transformer le produit semi-fini en une pièce finale, compte tenu également des frais d'outillage, notamment pour les matrices, et compte tenu enfin des coûts des machines, notamment le coût des presses à forger, il est apparu souhaitable de simplifier la fabrication des pièces énoncées plus haut.

Le but de l'invention est donc de proposer un procédé de réalisation de pièces profilées par laminage et estampage nécessitant moins de manipulations et impliquant, si possible, moins d'outils.

Le but de l'invention est atteint avec un procédé de laminage et d'estampage à chaud pour obtenir une pièce profilée ayant des variations de section, le procédé comprenant une première étape de laminage par laquelle un lopin est soumis à un premier formage et au moins une étape supplémentaire de laminage permettant d'affiner le formage, ces étapes étant suivies d'au moins une étape d'estampage pour obtenir la forme définitive de la pièce.

Conformément au procédé selon l'invention, qui est défini dans la revendication 1, la dernière étape de laminage est faite avec des rouleaux pourvus de gravures d'ébauche donnant à la pièce sa forme définitive à l'exception de finitions, les finitions étant apportées à la pièce par une étape unique d'estampage moyennant une matrice de finition.

Les dispositions de l'invention permettent, grâce à l'élimination de l'opération d'estampage ébauche, d'obtenir des gains de cadence importants, car on double pratiquement le nombre de pièces qu'il est possible de produire sur une même installation, on obtient des gains en frais d'outillage puisque l'on n'a plus besoin d'une matrice ébauche, on obtient des gains en porte-outils et cassettes parce que les porte-outils et les cassettes sont plus simples du fait de l'unique matrice, et l'on obtient aussi des gains en précision dimensionnelle, car la frappe de l'estampage est réalisée à l'axe presse.

Selon l'invention, l'opération d'estampage ébauche est donc remplacée par une passe de laminage en gravure qui permet par ailleurs de répartir la matière d'une façon plus précise et plus proche du produit final.

La forme de l'ébauche laminée à la sortie de la dernière passe de laminage est sensiblement voisine de l'ébauche actuellement estampée, ce qui permettra le remplissage correcte des gravures lors de l'opération d'estampage de finition.

L'étape d'ébarbage comme dernière étape du procédé reste inchangée.

Selon un mode de réalisation avantageux de l'invention, le procédé de l'invention comprend trois étapes de laminage par lesquels un lopin est soumis à un premier formage, puis à un deuxième et à un troisième formage pour donner à la pièce une forme de plus en plus évoluée vers la forme définitive. Le procédé de l'invention comprend enfin une quatrième étape de laminage faite avec des rouleaux pourvus de gravures d'ébauche.

Avantageusement, le lopin est formé au cours des étapes de laminage et de l'étape unique d'estampage de manière à obtenir les pièces profilées par deux.

D'autres caractéristiques et avantages de la présente invention ressortiront de la description ci-après d'un mode de réalisation de l'invention. Cette description est faite en référence aux dessins dans lesquels :
- la figure 1 montre, en une vue d'ensemble, l'évolution d'une pièce à partir d'un lopin jusqu'à la quatrième passe de laminage et la suite sur deux matrices d'estampage, selon un procédé avant l'invention,
- la figure 2 montre, en une vue d'ensemble, l'évolution d'une pièce à partir d'un lopin jusqu'à la quatrième passe de laminage et la suite sur une matrice de finition d'estampage selon l'invention,
- la figure 3 montre une disposition de deux segments de laminage de deux rouleaux de laminage superposés avec quatre moules successifs chacun pour la mise en oeuvre du procédé de l'invention,
- la figure 4 montre une matrice de finition d'estampage pour la mise en oeuvre du procédé selon l'invention, et
- les figures 5 et 6 montrent respectivement un segment de cylindre de laminage avec une gravure classique de quatrième passe et un segment de cylindre de laminage avec une gravure selon l'invention.

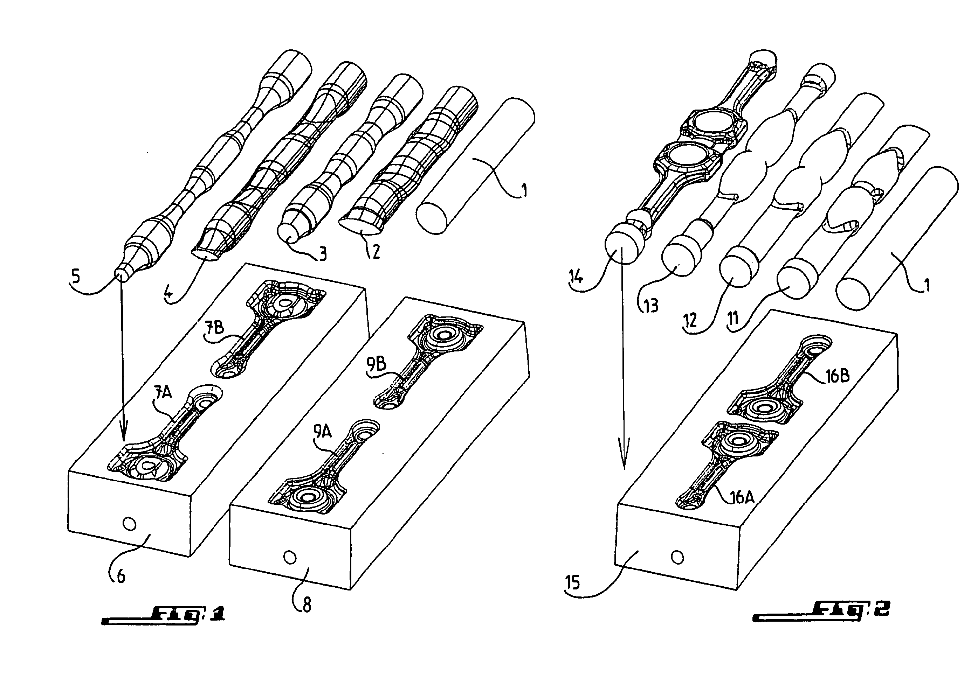

Lorsqu'une pièce telle qu'une bielle est réalisée sur un laminoir traditionnel à quatre passes, suivi d'un estampage en deux coups de presse de forgeage, on introduit une pièce cylindrique allongée, appelée le lopin, successivement entre quatre moules différents d'une paire de rouleaux de laminage portant des segments de laminage en alternance avec des espace vide, pour obtenir un préformage de plus en plus proche de la forme définitive de la pièce à fabriquer, comme cela est représenté sur la figure 1 par le lopin 1, une pièce 2 partiellement travaillée dans une première passe de laminage, une pièce 3 partiellement travaillée dans une deuxième passe de laminage, une pièce 4 partiellement travaillée dans une troisième passe de laminage et une pièce 5 partiellement travaillée dans une quatrième passe de laminage.

Cette suite de pièces partiellement travaillées peut être obtenue, comme indiqué ci avant, par une paire de cylindres ou rouleaux superposés et coopérant l'un avec l'autre, dont chacun des cylindres ou rouleaux comprend un ou plusieurs segments ayant des moules conformées de manière à obtenir une pièce de plus en plus travaillée lorsque chacune des pièces à travailler passe successivement d'un moule d'un segment de la paire de rouleaux au suivant.

Après être sortie du dernier moule du segment de la paire de rouleaux de laminage, chacune des pièces 5 est introduite d'abord dans une matrice d'ébauche d'une presse à forger où elle subit un estampage d'ébauche et est transférée ensuite vers une matrice de finition pour y obtenir sa forme définitive.

On notera accessoirement que la longueur du lopin 1 est choisie de manière telle que chacune des pièces 5 résultant des différentes passes de laminage, ait une forme et longueur suffisantes pour lui permettre de remplir aussi bien dans la matrice d'ébauche que dans la matrice de finition des volumes correspondant à deux pièces à obtenir à la fois, par exemple deux bielles, comme cela est représenté sur la figure 1.

Le procédé de l'invention reprend le principe de la suite de plusieurs passes de laminage suivies d'un coup de presse de forge du procédé décrit ci avant dans la mesure où le lopin 1 subit trois passes de laminage successives pendant lesquelles le lopin 1 devient successivement une pièce partiellement travaillée 11 après la première passe, une pièce partiellement travaillée 12 après la deuxième passe et une pièce partiellement travaillée 13 après la troisième passe de laminage. La quatrième passe de laminage selon l'invention est par contre effectuée avec un moule et le contre-moule correspondant conformés pour effectuer un laminage en gravure pour obtenir une pièce partiellement travaillée 14 qui ressemble déjà assez bien à une paire de pièces définitives.

Cette pièce 14 est alors transférée vers la presse de forgeage équipée d'une matrice unique de finition 15. La matrice 15 comporte deux creux 16A, 16B permettant d'obtenir la paire de pièces définitives, en l'occurrence deux bielles, lors de l'estampage unique de la pièce 14, avec un seul coup de presse.

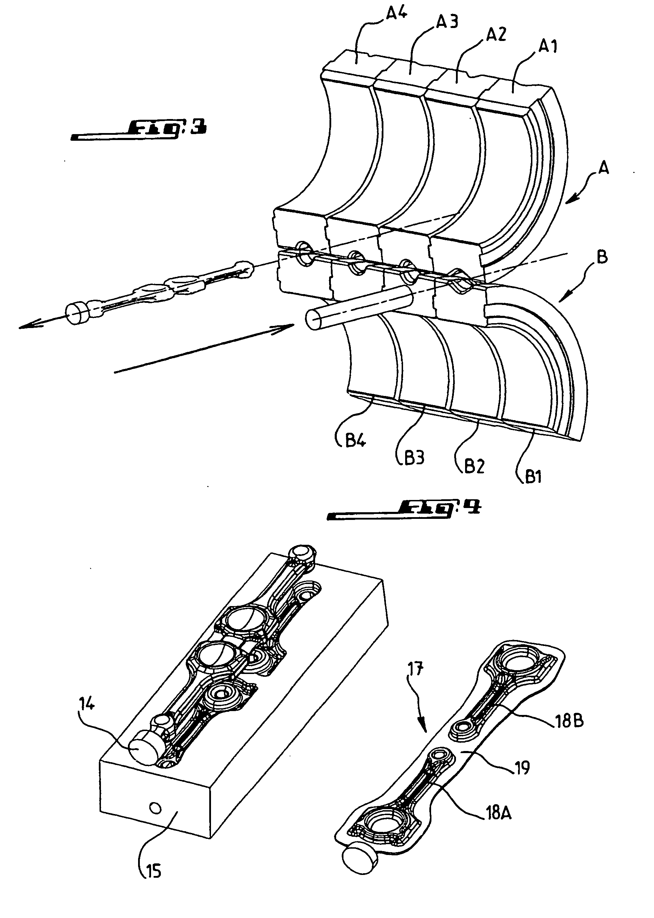

La figure 3 montre schématiquement une paire de rouleaux de laminage A, B, représentés chacun par quatre moules successifs, dans la direction axiale de chaque segment de laminage. Selon cette disposition, le rouleau supérieur A comprend quatre moules A1, A2, A3, A4 référencés dans l'ordre des passes successives, et le rouleau inférieur B comprend quatre moules B1, B2, B3, B4 également référencés dans l'ordre des passes successives. Les rouleaux supérieur A et inférieur B sont présentés dans une position correspondant au moment de l'introduction d'un lopin 1 dans les moules A1, B1 de première passe et à la sortie de la pièce d'ébauche des moules d'ébauche A4, B4 après la quatrième passe.

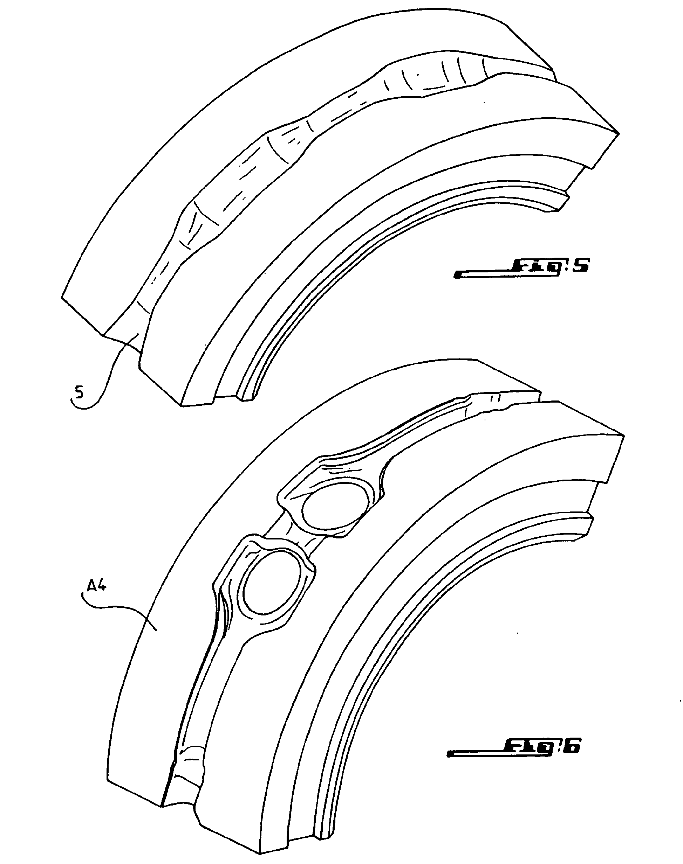

La figure 3 montre la disposition des moules A1 à A4 et B1 à B4 du côté intérieur des segments de laminage des rouleaux A et B pour faciliter la représentation de la mise en oeuvre du procédé. Les surfaces correspondantes des quatrièmes moules de chacun des segments des rouleaux sans utilisation de l'invention et avec utilisation de l'invention sont représentées respectivement sur les figures 5 et 6.

La figure 4 montre la matrice de finition 15 avec une pièce 14 légèrement surélevée par rapport à la matrice et, à côté de la matrice, une pièce 17 résultant d'un forgeage de finition. La pièce 17 comprend outre deux bielles 18A, 18B, un entourage de bavure 19 destiné à être enlevé dans l'étape d'ébavurage qui termine la réalisation des pièces par laminage et estampage selon l'invention.

On notera que la disposition relative des pièces à fabriquer est sans importance pour le principe de la présente invention. Ainsi, la pièce 14 montre deux bielles en l'état d'ébauche inversement disposée par rapport à la disposition des bielles en l'état de finition de la pièce 17.

## Revendications

1. Procédé de laminage et d'estampage à chaud pour obtenir une pièce profilée (18A, 18B) ayant des variations de section, le procédé comprenant une première étape de laminage par laquelle un lopin (1) est soumis à un premier formage et au moins une étape supplémentaire de laminage permettant d'affiner le formage, ces étapes étant suivies d'au moins une étape d'estampage pour obtenir la forme définitive de la pièce,
**caractérisé en ce que** la dernière étape de laminage est faite avec des rouleaux (A, B) pourvus de gravures d'ébauche (A4, B4) donnant à la pièce sa forme définitive, à l'exception de finitions, et **en ce que** les finitions sont apportées à la pièce par une étape unique d'estampage moyennant une matrice de finition (15).

2. Procédé selon la revendication 1, **caractérisé en ce qu'**il comprend trois étapes de laminage par lesquelles un lopin (1) est soumis à un premier formage, puis à un deuxième et un troisième formages pour donner à la pièce une forme de plus en plus évoluée vers la forme définitive, et **en ce qu'**il comprend une quatrième étape de laminage faite avec des rouleaux (A, B) pourvus de gravures d'ébauche (A4, B4).

3. Procédé selon la revendication 1 ou 2, **caractérisé en ce que** le lopin (1) est formé au cours des étapes de laminage et de l'étape d'estampage de manière à obtenir les pièces profilées par deux.

4. Procédé selon l'une quelconque des revendications 1 à 3, **caractérisé en ce que** l'étape unique d'estampage est suivie d'une étape d'ébarbage.

## Claims

1. A method for rolling and heat stamping to obtain a molded piece (18A, 18B) having variations in cross-section, the method comprising a first rolling step through which a slug (1) is subjected to a first forming and at least one additional rolling step making it possible to refine the forming, these steps being followed by at least one stamping step to obtain the definitive shape of the piece,
**characterized in that** the last rolling step is done with rollers (A, B) provided with edgers (A4, B4) giving the piece its definitive shape, with the exception of finishings, and **in that** the finishings are added to the piece through a single stamping step with a finishing matrix (15).

2. The method according to claim 1, **characterized in that** it comprises three rolling steps through which a slug (1) is subjected to a first forming, then a second and third forming to give the piece a shape evolving increasingly closer to the definitive shape, and **in that** it comprises a fourth rolling step done with rollers (A, B) provided with edgers (A4, B4).

3. The method according to claim 1 or 2, **characterized in that** the slug (1) is formed during the rolling steps and the stamping step so as to obtain molded pieces in pairs.

4. The method according to any one of claims 1 to 3, **characterized in that** the single stamping step is followed by a deburring step.

## Patentansprüche

1. Walz- und Warmpressverfahren zur Herstellung eines Profilteils (18A, 18B) mit veränderten Querschnitten, wobei das Verfahren einen ersten Walzschritt umfasst, bei dem ein Rohling (1) einer ersten Formgebung unterzogen wird und mindestens einen zusätzlichen Walzschritt, der es erlaubt, die Formgebung zu verfeinern, wobei diesen Schritten mindestens ein Schritt des Warmpressens zur Herstellung der endgültigen Form des Teils folgt,
**dadurch gekennzeichnet, dass** der letzte Walzschritt mit Walzen (A, B) durchgeführt wird, die mit Profilgravuren (A4, B4) ausgestattet sind, die dem Teil seine endgültige Form verleihen, mit Ausnahme der Feinbearbeitungen, und **dadurch**, dass die Feinbearbeitungen des Teils mit Hilfe eines einzigen Pressschritts mit einer Feinbearbeitungsmatrize (15) erfolgen.

2. Verfahren nach Anspruch 1, **dadurch gekennzeichnet, dass** es drei Walzschritte umfasst, mit denen ein Rohling (1) einer ersten Formgebung unterzogen wird und danach einer zweiten und einer dritten Formgebung, um dem Teil eine immer entwickeltere Form in Richtung der endgültigen Form zu verleihen, und **dadurch**, dass es einen vierten Walzschritt umfasst, der mit Walzen (A, B) durchgeführt wird, die mit Profilgravuren (A4, B4) ausgestattet sind.

3. Verfahren nach Anspruch 1 oder 2, **dadurch gekennzeichnet, dass** der Rohling (1) im Laufe der Walzschritte und des Pressschritts zur Herstellung paariger Profilteile geformt wird.

4. Verfahren nach einem der Ansprüche 1 bis 3, **dadurch gekennzeichnet, dass** dem einzigen Pressschritt ein Entgratungsschritt folgt.
